# EUROPEAN PATENT APPLICATION

(11) **EP 2 371 763 A1**
(43) Date of publication of application: **05.10.2011**
(21) Application number: 09830320.9
(22) Date of filing: 24.11.2009
(51) Int. Cl.: C01B 7/07, B01D 3/14

(54) **HYDROCHLORIC ACID PURIFYING METHOD**

(30) Priority: 03.12.2008 JP 2008308723
(71) Applicant: Sumitomo Chemical Company, Limited, Tokyo 104-8260 (JP)
(72) Inventor: SHIMIZU, Toyomitsu, Niihama-shi Ehime 792-0025 (JP); OMOTO, Norihito, Niihama-shi Ehime 792-0025 (JP); FUTAGAMI, Shoichi, Niihama-shi Ehime 792-0012 (JP); MIYAMURA, Sadayuki, Niihama-shi Ehime 792-0044 (JP)
(74) Representative: Duckworth, Timothy John
(86) International application number: PCT/JP2009/069767
(87) International publication number: WO 2010/064553

(57) **Abstract**

Provided is a method of purifying hydrochloric acid by removing an organic substance having a boiling point of - 25 °C to 120 °C under atmospheric pressure from a first organic substance-containing hydrochloric acid that contains the organic substance and has a hydrogen chloride concentration higher than an azeotropic hydrogen chloride concentration under atmospheric pressure. The method includes the step of subjecting a second organic substance-containing hydrochloric acid to distillation using a distillation tower under atmospheric pressure, to distill out the organic substance from a top of the distillation tower. The second organic substance-containing hydrochloric acid is obtained by mixing the first organic substance-containing hydrochloric acid and water or dilute hydrochloric acid and has the hydrogen chloride concentration lower than the azeotropic hydrogen chloride concentration under atmospheric pressure.

## Description

### TECHNICAL FIELD

The present invention relates to a method of purifying hydrochloric acid, and more specifically, to a method of producing high-purity hydrochloric acid not containing an organic substance from hydrochloric acid containing the organic substance.

### BACKGROUND ART

In the process of producing a compound in which a chloro compound is treated, hydrochloric acid is generated as a by-product and the like. This hydrochloric acid usually contains impurities characteristic of the producing process. For example, hydrochloric acid obtained as a by-product in the process of producing allyl chloride from propylene and chlorine gas contains organic impurities having a relatively low boiling point, such as 2-chloropropane (2CP) [bp = 36 °C], allyl chloride [bp = 23 °C] and isopropyl alcohol (IPA) [bp = 82 °C].

Furthermore, hydrochloric acid obtained as a by-product in the process of obtaining isocyanate by the reaction of amine and phosgene contains organic impurities having a relatively high boiling point, such as chlorobenzene [bp = 131 °C] and dichlorobenzene [bp = 180 °C] which are mainly used as solvents.

In order to effectively utilize the above-described by-product hydrochloric acid as raw materials in other synthetic processes, it is preferable that a very small amount of organic impurities contained in the by-product hydrochloric acid is removed to the maximum extent possible. For example, Japanese Patent Laying-Open No. 2003-112907 (Patent Document 1) discloses that an organic substance in hydrogen chloride is removed by activated carbon adsorption.

### PRIOR ART DOCUMENTS

### PATENT DOCUMENTS

Patent Document 1: Japanese Patent Laying-Open No. 2003-112907

### SUMMARY OF THE INVENTION

### PROBLEMS TO BE SOLVED BY THE INVENTION

However, it is difficult by the activated carbon adsorption to obtain high-purity hydrochloric acid by removing organic impurities having a relatively low boiling point, from hydrochloric acid containing the organic impurities, such as hydrochloric acid produced as a by-product in the process of producing allyl chloride.

An object of the present invention is to provide a method of producing high-purity hydrochloric acid substantially not containing an organic substance having a relatively low boiling point, specifically, - 25 °C to 120 °C, under atmospheric pressure, from hydrochloric acid containing the organic substance.

### MEANS FOR SOLVING THE PROBLEMS

The present invention provides a method of purifying hydrochloric acid by removing an organic substance having a boiling point of - 25 °C to 120 °C under atmospheric pressure from a first organic substance-containing hydrochloric acid that contains the organic substance and has a hydrogen chloride concentration higher than an azeotropic hydrogen chloride concentration under atmospheric pressure. The method includes the step of subjecting a second organic substance-containing hydrochloric acid to distillation using a distillation tower under atmospheric pressure, to distill out the organic substance from a top of the distillation tower. The second organic substance-containing hydrochloric acid is obtained by mixing the first organic substance-containing hydrochloric acid and water or dilute hydrochloric acid and has the hydrogen chloride concentration lower than the azeotropic hydrogen chloride concentration under atmospheric pressure.

During the distillation of the second organic substance-containing hydrochloric acid, it is preferable that the organic substance is distilled out from the top of the distillation tower while reflux is performed for condensing distillate gas from the top of the distillation tower and returning a part of an obtained condensate liquid to the top of the distillation tower.

The method of purifying hydrochloric acid according to the present invention includes, in one preferable embodiment, the steps of:
(a) continuously introducing, into the distillation tower, the second organic substance-containing hydrochloric acid obtained by mixing the first organic substance-containing hydrochloric acid and water or dilute hydrochloric acid and having the hydrogen chloride concentration lower than the azeotropic hydrogen chloride concentration under atmospheric pressure; and
(b) subjecting the second organic substance-containing hydrochloric acid introduced into the distillation tower to distillation under atmospheric pressure, to distill out the organic substance from the top of the distillation tower and continuously collect hydrochloric acid substantially not containing the organic substance from a bottom of the distillation tower.

The method of purifying hydrochloric acid according to the present invention includes, in another preferable embodiment, the steps of:
(i) continuously introducing the first organic substance-containing hydrochloric acid into the distillation tower and continuously introducing water from the top of the distillation tower into the distillation tower; and
(ii) subjecting the second organic substance-containing hydrochloric acid produced within the distillation tower to distillation under atmospheric pressure, to distill out the organic substance from the top of the distillation tower and continuously collect hydrochloric acid substantially not containing the organic substance from a bottom of the distillation tower.

The organic substance removed by the method of purifying hydrochloric acid according to the present invention is an organic substance having a boiling point of - 25 °C to 120 °C under atmospheric pressure and suitable examples thereof include isopropyl alcohol, 2-chloropropane, allyl chloride, and the like.

### EFFECTS OF THE INVENTION

According to the present invention, organic impurities can be effectively removed from hydrochloric acid containing the organic impurities having a boiling point of - 25 °C to 120 °C under atmospheric pressure, and particularly, from hydrochloric acid containing the organic impurities and having a hydrogen chloride concentration higher than an azeotropic hydrogen chloride concentration under atmospheric pressure. Consequently, high-purity hydrochloric acid can be obtained.

Furthermore, the purifying method according to the present invention allows complete or almost complete elimination of the loss of hydrogen chloride, due to purification process, that is contained in the organic substance-containing hydrochloric acid subjected to purification. Accordingly, purified hydrochloric acid containing the total or almost total amount of hydrogen chloride contained in the organic substance-containing hydrochloric acid subjected to purification can be obtained.

### BRIEF DESCRIPTION OF THE DRAWINGS

Fig. 1 is a diagram schematically showing a preferable example of a method of purifying hydrochloric acid according to the present invention and the configuration of an apparatus used therefor.
Fig. 2 is a diagram schematically showing another preferable example of a method of purifying hydrochloric acid according to the present invention and the configuration of an apparatus used therefor.
Fig. 3 is a flow diagram schematically showing an example of the process for obtaining high-purity hydrochloric acid substantially not containing isopropyl alcohol (IPA) from an organic substance-containing hydrochloric acid containing IPA, in accordance with the present invention.
Fig. 4 is a flow diagram schematically showing another example of the process for obtaining high-purity hydrochloric acid substantially not containing isopropyl alcohol (IPA) from an organic substance-containing hydrochloric acid containing IPA, in accordance with the present invention.

### MODES FOR CARRYING OUT THE INVENTION

The present invention relates to a method of purifying hydrochloric acid by removing an organic substance having a boiling point of -25 °C to 124 °C under atmospheric pressure from a first organic substance-containing hydrochloric acid that contains the organic substance and has a hydrogen chloride concentration higher than an azeotropic hydrogen chloride concentration under atmospheric pressure. The present invention will be hereinafter described in detail with reference to the embodiments.

### [First Embodiment]

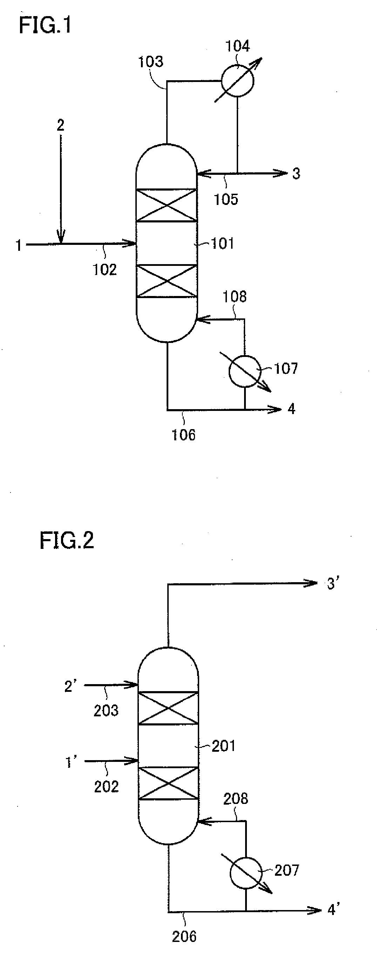

Fig. 1 is a diagram schematically showing a preferable example of a method of purifying hydrochloric acid according to the present invention and the configuration of an apparatus used therefor. Each step of the method of purifying hydrochloric acid according to the present embodiment will be hereinafter described in detail with reference to Fig. 1.

### (a) First Step

Hydrochloric acid containing the organic substance subjected to the purifying method according to the present invention is the first organic substance-containing hydrochloric acid that contains the organic substance having a boiling point of -25 °C to 120 °C under atmospheric pressure and has a hydrogen chloride concentration higher than an azeotropic hydrogen chloride concentration under atmospheric pressure. The organic substance having a boiling point of -25 °C to 120 °C under atmospheric pressure, that can be removed according to the present invention, may include various types of organic substances including, for example, isopropyl alcohol (IPA) [bp (the boiling point at 1 atm; the same shall apply hereinafter) = 82 °C], 2-chloropropane (2-CP) [bp = 36 °C], allyl chloride [bp = 23 °C], carbon tetrachloride [bp = 77 °C], dichloromethane [bp = 40 °C], chloromethane [bp = -24 °C], dichloroethane [bp = 57 °C], a vinyl chloride monomer [bp = -14 °C], and the like. Particularly, the present invention allows effective removal of isopropyl alcohol, 2-chloropropane, allyl chloride, and the like in hydrochloric acid. The number of types of the organic substances contained in the first organic substance-containing hydrochloric acid may be only one or two or more. The concentration of the organic substance contained in the first organic substance-containing hydrochloric acid is not particularly limited, but is usually approximately 1 to 10000 mass ppm in the first organic substance-containing hydrochloric acid, and preferably, approximately 10 to 1000 mass ppm.

The first organic substance-containing hydrochloric acid has a hydrogen chloride concentration [(mass of hydrogen chloride) /(the total mass of hydrogen chloride and water contained in the first organic substance-containing hydrochloric acid) × 100 %] higher than the azeotropic hydrogen chloride concentration of hydrochloric acid under atmospheric pressure. The "azeotropic hydrogen chloride concentration under atmospheric pressure" means the concentration of hydrogen chloride on the mass basis in the azeotropic composition of hydrochloric acid under atmospheric pressure. The relationship between the pressure and the azeotropic hydrogen chloride concentration of hydrochloric acid is described, for example, in "Soda Handbook" (published by Japan Soda Industry Association in 1998) and the like. The specific numerical value of the "azeotropic hydrogen chloride concentration under atmospheric pressure" can be referred to the document. The azeotropic hydrogen chloride concentration of hydrochloric acid is 20.2 percent by mass, and the azeotropic temperature (azeotropic point) is 108.7 °C at 101.3 kPa (1 atm). The first organic substance-containing hydrochloric acid is not particularly limited. However, for example, an organic substance-containing hydrochloric acid obtained as a by-product in various processes of producing an organic compound can be used as it is. In addition, those subjected to the process required for the organic substance-containing hydrochloric acid (adjustment of the hydrogen chloride concentration, pre-purification, or the like) can also be used. Furthermore, the first organic substance-containing hydrochloric acid may be obtained by absorbing, in water or hydrochloric acid, organic substance-containing hydrogen chloride gas obtained as a by-product in various processes of producing an organic compound.

In the present step, referring to Fig. 1, a first organic substance-containing hydrochloric acid 1 as described above and water 2 are mixed together, thereby obtaining the second organic substance-containing hydrochloric acid having a hydrogen chloride concentration lower than the azeotropic hydrogen chloride concentration under atmospheric pressure. The second organic substance-containing hydrochloric acid is then introduced through a piping 102 into a distillation tower 101. The amount of water 2 for diluting first organic substance-containing hydrochloric acid 1 is not particularly limited as long as it is an amount that allows the hydrogen chloride concentration of the second organic substance-containing hydrochloric acid to be lower than the azeotropic hydrogen chloride concentration under atmospheric pressure. Furthermore, as long as the hydrogen chloride concentration of the second organic substance-containing hydrochloric acid is lower than the azeotropic hydrogen chloride concentration under atmospheric pressure, water 2 used for diluting the first organic substance-containing hydrochloric acid is not limited to water itself, but dilute hydrochloric acid or the like may also be used, for example.

As long as the hydrogen chloride concentration of the second organic substance-containing hydrochloric acid is lower than the azeotropic hydrogen chloride concentration under atmospheric pressure, the hydrogen chloride concentration is not particularly limited. It is preferable that, though depending on the content of the organic substance in the first organic substance-containing hydrochloric acid, the hydrogen chloride concentration of the second organic substance-containing hydrochloric acid is closer to the azeotropic hydrogen chloride concentration under atmospheric pressure since the higher the hydrogen chloride concentration of the hydrochloric acid finally obtained by the purification process is, the more the versatility is enhanced and the added value is increased. Specifically, the hydrogen chloride concentration of the second organic substance-containing hydrochloric acid is preferably about 15 to 20 percent by mass, and more preferably, about 18 to 20 percent by mass.

The method of introducing the second organic substance-containing hydrochloric acid into distillation tower 101 is selected as appropriate depending on whether distillation of the second organic substance-containing hydrochloric acid in the subsequent step is performed in a batch-wise manner or in a continuous manner. As described below, it is preferable that the second organic substance-containing hydrochloric acid is subjected to distillation in a continuous manner. In this case, the second organic substance-containing hydrochloric acid is continuously introduced into distillation tower 101. In consideration of the separation efficiency of the organic substance by distillation and the efficiency of preventing distillation of hydrochloric acid out of the top of the tower, it is preferable that the position where the second organic substance-containing hydrochloric acid is introduced into distillation tower 101 (the position of piping 102 in distillation tower 101) is located in proximity to the center section with respect to the height direction of distillation tower 101.

### (b) Second Step

In the present step, referring to Fig. 1, the second organic substance-containing hydrochloric acid introduced into distillation tower 101 is heated and thereby subjected to distillation under atmospheric pressure, which causes the organic substance to be distilled out of the top of distillation tower 101, thereby performing purification of the second organic substance-containing hydrochloric acid. By performing this operation, hydrochloric acid substantially not containing any organic substance can be obtained. A purified hydrochloric acid 4 substantially not containing any organic substance is collected from the bottom of distillation tower 101. The organic substance is collected from the top of the tower as a mixture 3 of the organic substance and water (see Fig. 1).

In the present invention, the operation pressure for distillation is assumed to be atmospheric pressure (usually, about -20 kPaG to 20 kPaG). The operation temperature for distillation (the temperature at the bottom of the distillation tower) depends on the operation pressure and the composition of the second organic substance-containing hydrochloric acid, but is usually approximately 103 °C to 114 °C.

The type of the distillation tower is not particularly limited, and may be a commonly used distillation tower such as a packed tower or a tray tower, in which case a packed tower is preferable since it has a simplified structure. Examples of a packing agent packed into the packed tower may include, for example, a conventional agent such as Raschig ring, Paul ring, or Tellerette (registered trademark). In order to more efficiently suppress or prevent distillation of hydrochloric acid out of the top of the tower, it is preferable, as shown in Fig. 1, that a condensation unit including a piping 103, a heat exchanger (condenser) 104 and a piping 105 is provided at the top of distillation tower 101, to perform the reflux operation by which the gas distilled out of the top of the tower is condensed to obtain a condensate liquid, a part of which is then returned to the top of the tower. Also as shown in Fig. 1, a piping 106, a heat exchanger (reboiler) 107 and a piping 108 can be provided at the bottom of distillation tower 101. In this case, when an operation is performed for returning a part of a liquid extracted from the bottom of distillation tower 101 back to the bottom thereof, the organic substance concentration in purified hydrochloric acid can be further decreased.

Distillation of the second organic substance-containing hydrochloric acid can be performed either in a continuous manner or in a batch-wise manner, but preferably performed in a continuous manner. In the case where distillation is performed in a batch-wise manner and the initial hydrogen chloride concentration of the second organic substance-containing hydrochloric acid is relatively high, the hydrogen chloride concentration of the second organic substance-containing hydrochloric acid in the middle of distillation may reach the azeotropic hydrogen chloride concentration under atmospheric pressure before the total amount of the organic substance is removed. Consequently, hydrogen chloride may be mixed into the mixture of the organic substance and water which are collected from the top of the tower. When distillation is performed in a continuous manner, the second organic substance-containing hydrochloric acid is continuously introduced into the distillation tower while continuously collecting the mixture of the organic substance and water from the top of the tower and also continuously collecting the purified hydrochloric acid from the bottom of the tower. Consequently, the hydrogen chloride concentration of the second organic substance-containing hydrochloric acid within the distillation tower can be kept stationary.

### [Second Embodiment]

Fig. 2 is a diagram schematically showing another preferable example of a method of purifying hydrochloric acid according to the present invention and the configuration of an apparatus used therefor. Each step of the method of purifying hydrochloric acid according to the present embodiment will be hereinafter described in detail with reference to Fig. 2.

### (i) First Step

The present step is for introducing the first organic substance-containing hydrochloric acid into the distillation tower while introducing water into the distillation tower from the top of the tower. The first organic substance-containing hydrochloric acid subjected to the purification method of the present embodiment is the same as that described in the above first embodiment.

In the present embodiment, as shown in Fig. 2, in contrast to the above-described first embodiment, a first organic substance-containing hydrochloric acid 1' and water 2' are introduced separately through a piping 202 and a piping 203, respectively, into a distillation tower 201 without mixing with each other in advance. As in the case of the first embodiment, water 2' introduced into distillation tower 201 may be water itself or may be dilute hydrochloric acid or the like as long as the hydrogen chloride concentration of the second organic substance-containing hydrochloric acid produced within distillation tower 201 is lower than the azeotropic hydrogen chloride concentration under atmospheric pressure. The amount of water (or hydrochloric acid) 2' introduced into distillation tower 201 is also not particularly limited as long as it is an amount that allows the hydrogen chloride concentration of the second organic substance-containing hydrochloric acid produced within distillation tower 201 to be lower than the azeotropic hydrogen chloride concentration under atmospheric pressure. The hydrogen chloride concentration of the second organic substance-containing hydrochloric acid produced within distillation tower 201 is the same as that in the above-described first embodiment.

In the present embodiment, it is preferable that water (or hydrochloric acid) is introduced into distillation tower 201 from the top of the tower. Consequently, the same effect as that obtained by reflux can be obtained without performing the reflux operation described in the above first embodiment. In consideration of the separation efficiency of the organic substance by distillation and the efficiency of preventing distillation of hydrochloric acid out of the top of the tower, it is preferable that the position where the first organic substance-containing hydrochloric acid is introduced is located in proximity to the center section with respect to the height direction of distillation tower 201.

### (ii) Second Step

In the present step, referring to Fig. 2, the second organic substance-containing hydrochloric acid produced from first organic substance-containing hydrochloric acid 1' and water 2' introduced into distillation tower 201 is heated and thereby subjected to distillation under atmospheric pressure. This causes the organic substance to be distilled out of the top of distillation tower 201, to obtain hydrochloric acid substantially not containing the organic substance. A purified hydrochloric acid 4' substantially not containing the organic substance is collected from the bottom of distillation tower 201. The organic substance is collected from the top of the tower as a mixture 3' of the organic substance and water (see Fig. 2). As for distillation, the operation pressure, the operation temperature and the type of the distillation tower are the same as those in the first embodiment.

As shown in Fig. 2, for the purpose of further decreasing the organic substance concentration in purified hydrochloric acid 4', a piping 206, a heat exchanger (reboiler) 207 and a piping 208 may be provided at the bottom of distillation tower 201 to perform the operation for returning a part of a liquid extracted from the bottom of distillation tower 201 back to the bottom of distillation tower 201. Although a condensation unit may be provided at the top of the distillation tower for performing the reflux operation as in the first embodiment, the reflux operation may often be unnecessary when water is introduced from the top of the tower. It is preferable to perform the reflux operation when water is introduced from other than the top of the tower.

Distillation can be performed either in a continuous manner or in a batch-wise manner, but preferably performed in a continuous manner. When distillation is performed in a continuous manner, the first organic substance-containing hydrochloric acid and water are continuously introduced into the distillation tower while continuously collecting the mixture of the organic substance and water from the top of the tower and also continuously collecting the purified hydrochloric acid from the bottom of the tower. Consequently, the hydrogen chloride concentration of the second organic substance-containing hydrochloric acid produced within the distillation tower can be kept stationary.

Purified hydrochloric acid obtained by the method according to the present invention is high-purity hydrochloric acid substantially not containing any organic substance (for example, approximately 0.1 mass ppm or lower). Furthermore, according to the method of the present invention, hydrogen chloride is hardly distilled out of the top of the tower during distillation. Accordingly, the resultant purified hydrochloric acid is to contain a total or an approximately total amount of hydrogen chloride contained in the second organic substance-containing hydrochloric acid introduced into the distillation tower or produced within the distillation tower. Therefore, the loss of hydrogen chloride caused by the purification process can be completely or nearly completely suppressed.

Since the purified hydrochloric acid obtained by the method according to the present invention is high-purity hydrochloric acid substantially not containing an organic substance, the purified hydrochloric acid can be suitably used as a raw material in the compound synthesizing process such as a hydrochloric acid oxidation process and also used as hydrochloric acid for food additives. Furthermore, in the case where the purified hydrochloric acid is used as hydrochloric acid for neutralization of alkaline waste water, the produced neutralized water can be released as waste water since it does not substantially contain any organic substance.

### Examples

Although the present invention will be hereinafter described in more detail with reference to Examples, the present invention is not limited thereto.

### [Example 1]

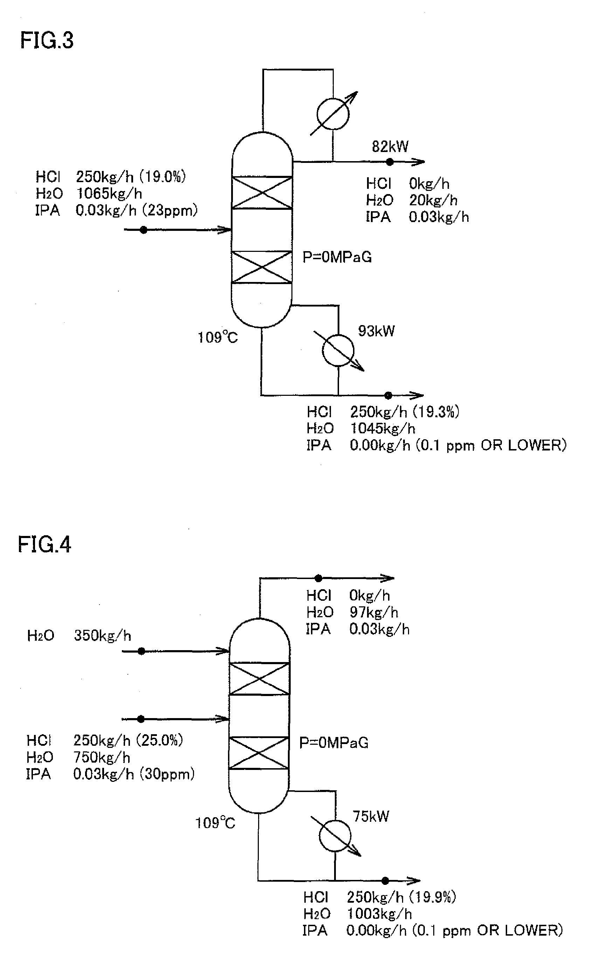

Fig. 3 is a flow diagram schematically showing an example of the process for obtaining high-purity hydrochloric acid substantially not containing isopropyl alcohol (IPA) from an organic substance-containing hydrochloric acid containing IPA in accordance with the present invention. Fig. 3 shows the operating conditions of distillation and the like, and the material balances of hydrogen chloride and IPA. The present example will be hereinafter described with reference to Fig. 3.

As shown in Fig. 3, provided is a distillation tower (packed tower) having a total theoretical plate number of 16 and equipped with a condenser at the top of the tower (the return piping from the condenser is installed at the first plate) and also equipped with a reboiler at the bottom of the tower. Into the distillation tower, the organic substance-containing hydrochloric acid obtained by mixing hydrochloric acid containing IPA and water (hydrogen chloride concentration: 19.0 percent by mass, IPA concentration: 23 mass ppm) is continuously supplied through the fourth plate of the distillation tower (the flow rate of hydrogen chloride gas: 250 kg/h, the flow rate of water: 1065 kg/h, the flow rate of IPA: 0.03 kg/h). The organic substance-containing hydrochloric acid introduced into the distillation tower is subjected to distillation on the conditions that the operation temperature (the temperature at the bottom of the tower) is 109 °C and the operation pressure is 0 MPaG (gauge pressure). Then, a mixture of IPA and water (the flow rate of water: 20 kg/h, the flow rate of IPA: 0.03 kg/h, the flow rate of hydrogen chloride: 0 kg/h) is continuously collected from the top of the tower. Also, a purified hydrochloric acid not containing IPA (the flow rate of hydrogen chloride: 250 kg/h, the flow rate of water: 1045 kg/h, the flow rate of IPA: 0.00 kg/h) is continuously collected from the bottom of the tower (the hydrogen chloride concentration of the purified hydrochloric acid: 19.3 percent by mass). During the distillation, the heat removal amount in the condenser is 82 kW and the heating amount in the reboiler is 93 kW.

### [Example 2]

Fig. 4 is a flow diagram schematically showing another example of the process for obtaining high-purity hydrochloric acid substantially not containing isopropyl alcohol (IPA) from an organic substance-containing hydrochloric acid containing IPA in accordance with the present invention. Fig. 4 shows the operating conditions of distillation and the like, and the material balances of hydrogen chloride and IPA. The present example will be hereinafter described with reference to Fig. 4.

As shown in Fig. 4, provided is a distillation tower (packed tower) having a total theoretical plate number of 16 and equipped with a reboiler at the bottom of the tower. Into the distillation tower, the organic substance-containing hydrochloric acid containing IPA (hydrogen chloride concentration: 25.0 percent by mass, IPA concentration: 30 mass ppm) is continuously supplied through the fourth plate of the distillation tower (the flow rate of hydrogen chloride gas: 250 kg/h, the flow rate of water: 750 kg/h, the flow rate of IPA: 0.03 kg/h) while water (the flow rate: 350 kg/h) is continuously supplied through the first plate of the distillation tower. The organic substance-containing hydrochloric acid and water introduced into the distillation tower is subjected to distillation on the conditions that the operation temperature (the temperature at the bottom of the tower) is 109 °C and the operation pressure is 0 MPaG (gauge pressure). Then, a mixture of IPA and water (the flow rate of water: 97 kg/h, the flow rate of IPA: 0.03 kg/h, the flow rate of hydrogen chloride: 0 kg/h) is continuously collected from the top of the tower. Also, a purified hydrochloric acid not containing IPA (the flow rate of hydrogen chloride: 250 kg/h, the flow rate of water: 1003 kg/h, the flow rate of IPA: 0.00 kg/h) is continuously collected from the bottom of the tower (the hydrogen chloride concentration of purified hydrochloric acid: 19.9 percent by mass). During the distillation, the heating amount in the reboiler is 75 kW.

It should be understood that the embodiments and examples disclosed herein are illustrative and non-restrictive in every respect. The scope of the present invention is defined by the claims, rather than the description above, and is intended to include any modifications within the scope and meaning equivalent to the claims.

### DESCRIPTION OF THE REFERENCE SIGNS

1, 1' first organic substance-containing hydrochloric acid, 2, 2' water or dilute hydrochloric acid, 3, 3' mixture of organic substance and water, 4, 4' purified hydrochloric acid, 101, 201 distillation tower, 102, 103, 105, 106, 108, 202, 203, 206, 208 piping, 104 heat exchanger (condenser), 107, 207 heat exchanger (reboiler).

## Claims

1. A method of purifying hydrochloric acid by removing an organic substance having a boiling point of - 25 °C to 120 °C under atmospheric pressure from a first organic substance-containing hydrochloric acid that contains the organic substance and has a hydrogen chloride concentration higher than an azeotropic hydrogen chloride concentration under atmospheric pressure, said method comprising the step of:
subjecting a second organic substance-containing hydrochloric acid to distillation using a distillation tower under atmospheric pressure, to distill out said organic substance from a top of said distillation tower, said second organic substance-containing hydrochloric acid being obtained by mixing said first organic substance-containing hydrochloric acid and water or dilute hydrochloric acid and having the hydrogen chloride concentration lower than the azeotropic hydrogen chloride concentration under atmospheric pressure.

2. The method of purifying hydrochloric acid according to claim 1, wherein, during the distillation of said second organic substance-containing hydrochloric acid, said organic substance is distilled out from the top of said distillation tower while reflux is performed for condensing distillate gas from the top of said distillation tower and returning a part of an obtained condensate liquid to the top of said distillation tower.

3. The method of purifying hydrochloric acid according to claim 1, comprising the steps of:
continuously introducing, into said distillation tower, the second organic substance-containing hydrochloric acid obtained by mixing said first organic substance-containing hydrochloric acid and water or dilute hydrochloric acid and having the hydrogen chloride concentration lower than the azeotropic hydrogen chloride concentration under atmospheric pressure; and
subjecting said second organic substance-containing hydrochloric acid introduced into said distillation tower to distillation under atmospheric pressure, to distill out said organic substance from the top of said distillation tower and continuously collect hydrochloric acid substantially not containing said organic substance from a bottom of said distillation tower.

4. The method of purifying hydrochloric acid according to claim 1, comprising the steps of:
continuously introducing said first organic substance-containing hydrochloric acid into said distillation tower and continuously introducing water from the top of said distillation tower into said distillation tower; and
subjecting said second organic substance-containing hydrochloric acid produced within said distillation tower to distillation under atmospheric pressure, to distill out said organic substance from the top of said distillation tower and continuously collect hydrochloric acid substantially not containing said organic substance from a bottom of said distillation tower.

5. The method of purifying hydrochloric acid according to claim 1, wherein said organic substance includes at least one of isopropyl alcohol, 2-chloropropane and allyl chloride.
